# EUROPEAN PATENT SPECIFICATION

(11) **EP 1 694 531 B1**
(45) Date of publication and mention of the grant of the patent: **10.09.2008**
(21) Application number: 04801047.4
(22) Date of filing: 12.11.2004
(51) Int. Cl.: B60P 1/44

(54) **UNITARY LIFT GATE**
EINTEILIGES HUBTOR
PLATE-FORME DE CHARGEMENT UNITAIRE

(30) Priority: 14.11.2003 US 714826
(43) Date of publication of application: 30.08.2006
(73) Proprietor: Maxon Lift Corporation, Cerritos, CA 90703 (US)
(72) Inventor: ABLABUTYAN, Karapet, Glendale, CA 91201 (US); BARK, Paul, Canyon Lake, CA 92587 (US)
(74) Representative: Miller, James Lionel Woolverton
(86) International application number: PCT/US2004/037917
(87) International publication number: WO 2005/049372

(56) References cited:
- EP-A- 1 162 111
- EP-A- 1 318 046
- US-A1- 2002 182 045

## Description

### Field of the Invention

The present invention generally relates to an apparatus for lifting loads according to the preamble of claims 1, 11 and 16.

The invention relates further to a method for providing such an apparatus according to claim 21, and to a method of mounting the apparatus to a vehicle according to claim 23.

### Background of the Invention

Lift gates are typically mounted at the rear of trucks, truck trailers and the like to bring payloads from ground level up to the truck bed or from the truck bed to the ground. In some applications, it is desirable to configure the lift gate so that it folds away when not in use. Examples of such designs are lift gate disclosed in the US 2002/0182045, as well as the cantilever Tuk-A-Way^{®} lift gates available from Maxon Lift Corporation (11921 Slauson Avenue, Santa Fe Springs, CA 90670). Typically, these lift gates employ parallelogram linkages to maintain the lift gate in a horizontal plane through the lifting range. The lift gate is attached to the parallelogram linkages by pivot members, which allow the lift gate to be placed in a generally vertical position when in the lowered position. When in the vertical position, operation of the lifting mechanism rotates the lift gate into an inverted, stowed position beneath the vehicle body.

Prior art Tuk type cantilever lift gates present various challenges having to do with their shipping and installation. All prior art Tuk type cantilever lift gates mount to the vehicle chassis. Thus, these lift gates are susceptible to misalignment with the vehicle body. When misaligned, operation of the lift gate can exert differential force on the vehicle body, tending to separate them. Further, typical cantilever lift gates, when shipped from the factory, are partially disassembled and have awkward shapes, requiring substantial packaging. Further, proper installation necessitates that several of the components must be precisely aligned and then securely mounted to the vehicle. Moreover, the lift gate must be fitted to the vehicle only after the vehicle body has been attached to the chassis. Consequently, proper installation of prior art lift gates involve significant time and expense.

Furthermore, in prior art lift gate designs, lift platforms may become misaligned with the vehicle body. When the misalignment becomes severe, operation of the lift gate can exert a differential force on the vehicle body, causing it to separate from the vehicle chassis.

Accordingly, it would be advantageous to have an apparatus for lifting loads that is convenient and simple for shipping and installation. It would also be advantageous for the apparatus to have high overall strength and reliability. It would be of further advantage for the apparatus to be easily adaptable for various vehicle configurations.

The invention is set out in the independent claims. Preferred or optional features are set out in the dependent claims.

### Brief Description of the Drawings

Figure 1 is a perspective view illustrating a unitary lift gate a stowed position in accordance with the present invention;
Figure 2 is a perspective view illustrating the lift gate of Fig.1 in a lowered position with a lift gate platform in a vertical orientation ;
Figure 3 is a side view illustrating the lift gate of Fig. 1 with the lift gate platform in the lowered position with the lift gate platform in a horizontal orientation;
Figure 4 is a perspective view illustrating the lift gate of Fig. 1 in a raised position with the lift gate platform in the horizontal orientation;
Figure 5 is a side view illustrating the lift gate of Fig. 1 in a raised position with the lift gate platform in the horizontal orientation;
Figure 6 is a perspective view illustrating the lift gate of Fig. 1 secured to a portion of a vehicle body in accordance with the present invention; and
Figure 7 is a perspective view illustrating a plurality of fully assembled unitary lift gates stacked together in accordance with the present invention; and
Figure 8 is a perspective view of a frame adapter in accordance with the present invention.

### Detailed Description of Various Embodiments

Various embodiments of the present invention are described hereinafter with reference to the figures. Elements of like structures or function are represented with like reference numerals throughout the figures. The figures are only intended to facilitate the description of specific embodiments of the invention. They are not intended as an exhaustive description of the invention or as a limitation on the scope of the invention. In addition, an aspect described in conjunction with a particular embodiment of the present invention is not necessarily limited to that embodiment and can be practiced in conjunction with any other embodiments of the invention.

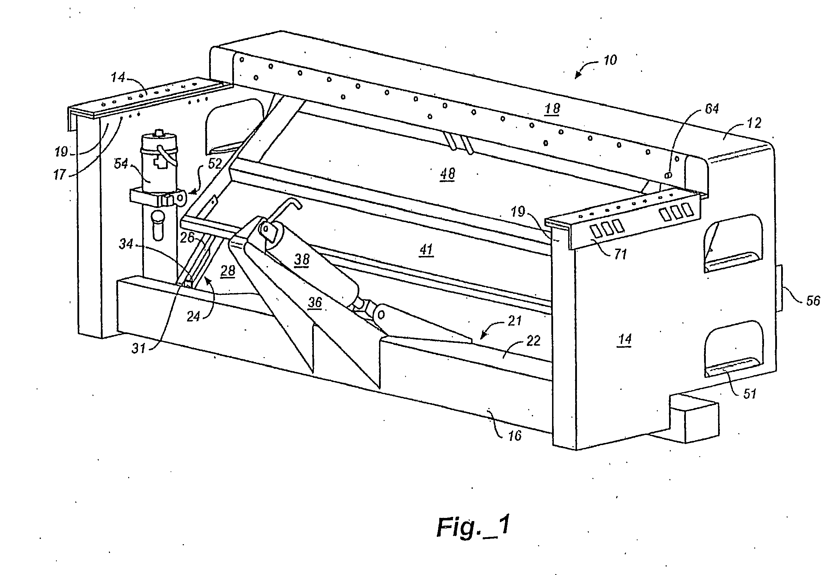

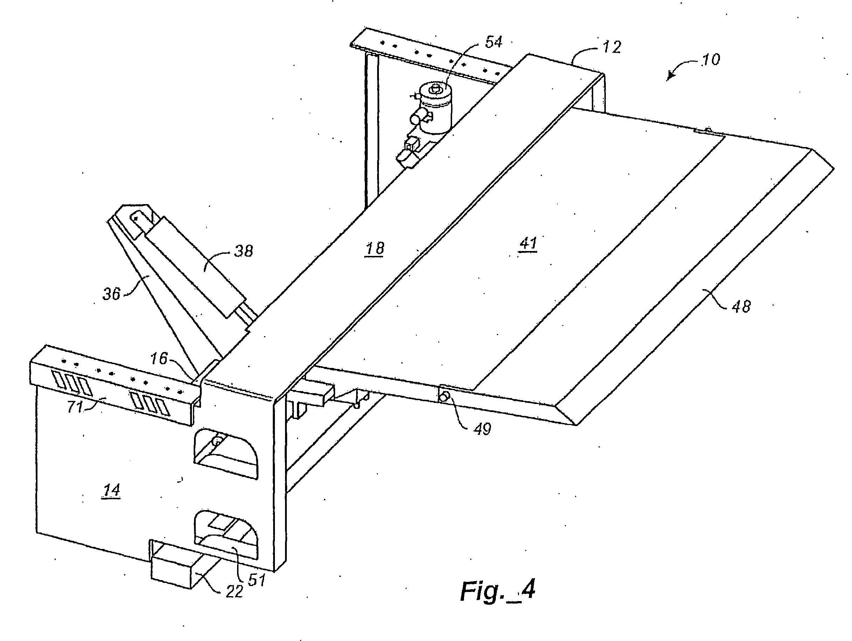

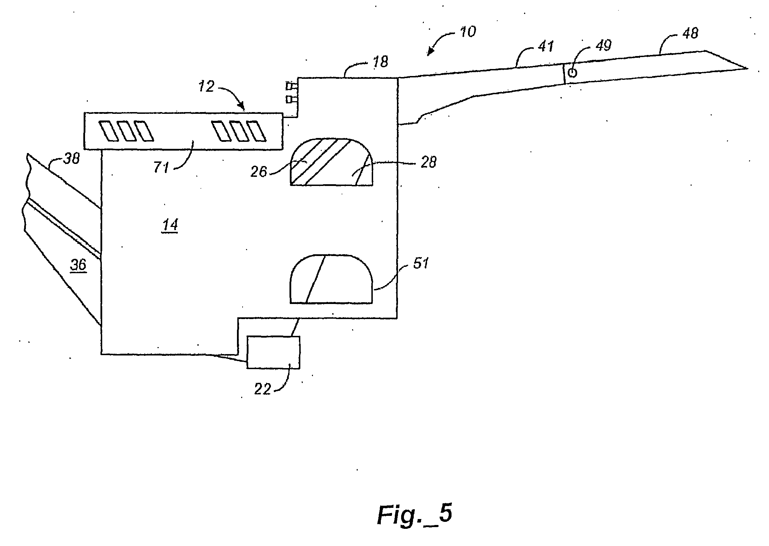

Figures 1-7 illustrate a unitary lift gate 10 in accordance with the present invention. Lift gate 10 is used for lifting loads between a low level, e.g., ground level, and a high level, e.g., a truck bed level. Lift gate 10 has a cantilever lifting mechanism. Accordingly, lift gate 10 is also referred to as a cantilever lift gate or simply a load lifting apparatus. The structural members of lift gate 10 are preferably formed from steel, but other metals or composite materials can be suitable depending upon the intended application.

Lift gate 10 includes a unitary frame 12 having an opposing pair of side plates 14. A trunnion bar 16 and an extension plate 18 extend between side plates 14. A plurality of holes or orifices 17 are formed in each of side plates 14 adjacent an upper edge 19 thereof.

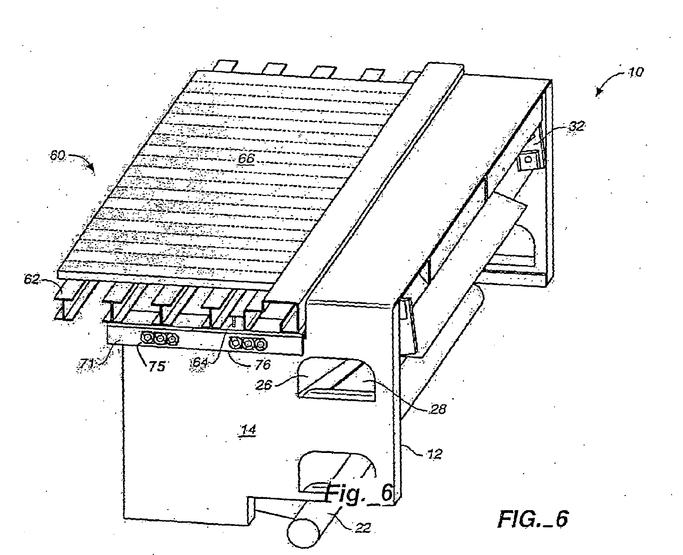

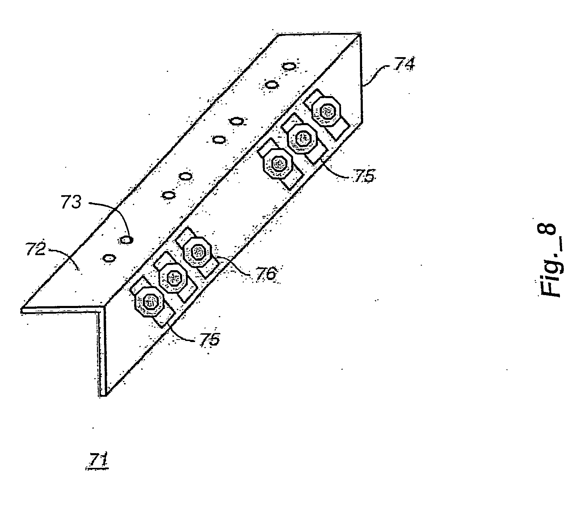

A pair of brackets or frame adapters 71 are removably attached to pair of side plates 14 near upper edges 19. Each of frame adapters 71 has two segments or sections. A perspective view of frame adapter 71 is shown in Fig. 8. A first section 72 is configured for attaching to a platform, e.g., a vehicle bed 66 as shown in Fig. 6. Holes 73 may be formed in first section 72 to attach frame adapter 71 to cross members 62 in vehicle bed 66 using bolts. First section 72 of frame adapter 71 can also be welded to vehicle bed 66. A second section 74 has a plurality of apertures 75 formed therein. Bolts 76 can be used to attach frame adapters 71 to side plates 14 through apertures 75 and orifices 17. In a preferred embodiment, apertures 75 are elongated slots that are oblique or perpendicular with respect to first section 72. Elongated slots allow the adjustment of the position of unitary frame 12 with respect to vehicle bed 66.

Lift gate 10 also includes a lift frame 21 that has a lift frame bar 22 extending between an opposing pair of parallelogram linkages 24. Each parallelogram linkage 24 includes an upper arm 26 and a lower arm 28, and a proximal pivot member 31 and a distal pivot member 32. Proximal pivot members 31 are attached to trunnion bar 16 thus securing lift frame 21 to unitary frame 12. Preferably, trunnion bar 16 comprises integral mounts 34 for attaching proximal pivot members 31.

A tower 36 is mounted on trunnion bar 16 of unitary frame 12. A hydraulic cylinder actuator 38 is pivotally attached at one end to tower 36 and at another end to lift frame bar 22. Tower 36 is also referred to as an actuator mount. A lift gate platform 41 is secured to distal pivot members 32 of parallelogram linkages 24. In operation, lift gate platform 41 carries the load. Lift gate platform 41 is also referred to as a load carrying plate. Hydraulic cylinder actuator 38 extends and retracts to raise and lower, respectively, lift gate platform 41 through lift frame 21. Parallelogram linkages 24 maintain the orientation of distal pivot members 32 with respect to proximal pivot members 31 as upper arms 26 and lower arms 28 are raised and lowered. Retraction of hydraulic cylinder actuator 38 drives lift frame bar 22, rotating upper arms 26 and lower arms 28 about proximal pivot members 31 to lower lift gate platform 41. Conversely, an extension of hydraulic cylinder actuator 38 raises lift frame bar 22.

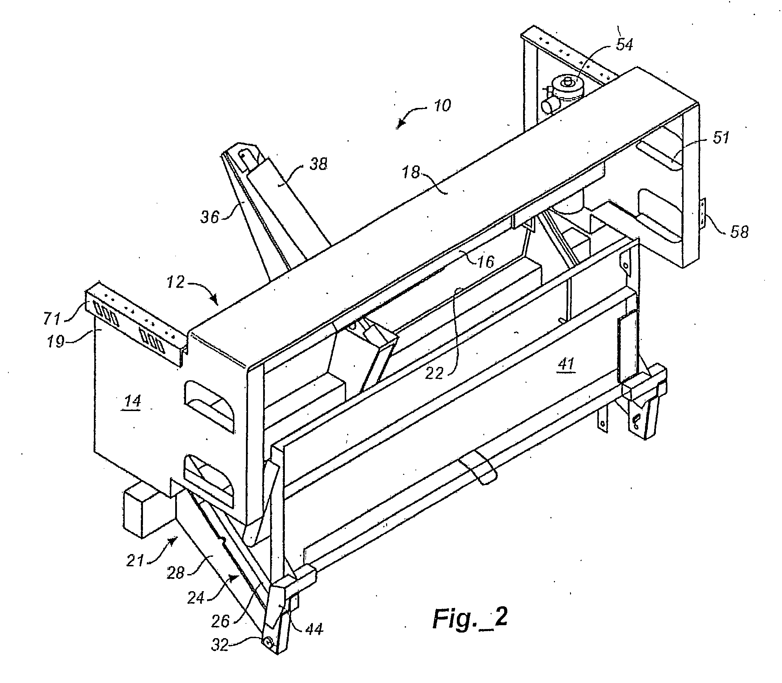

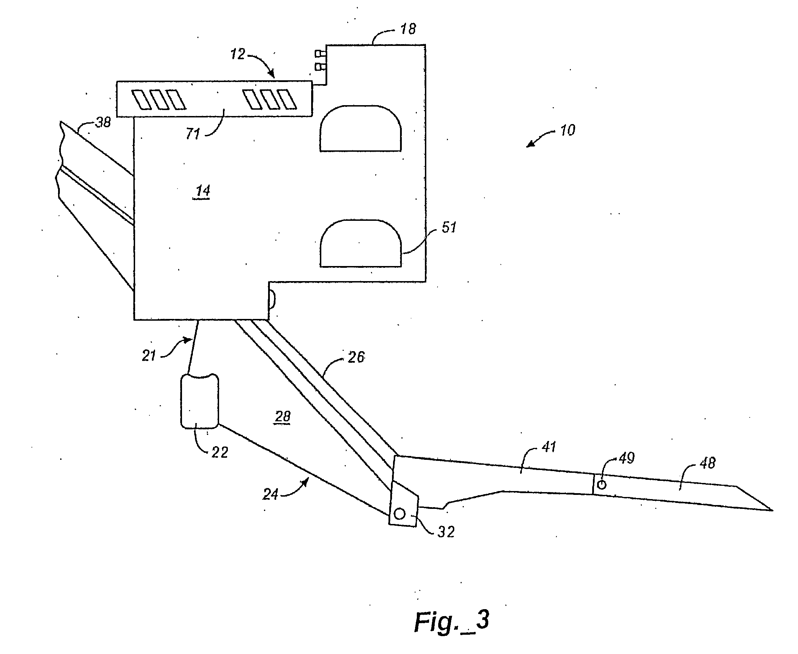

Lift gate platform 41 is rotatably attached to distal pivot members 32. Lift gate 10 is also referred to as a cantilever lift gate, wherein the term cantilever refers to lift gate 10 having lift gate platform 41 supported at one end only by the pivotal attachment to distal pivot members 32. Motion limiting tabs 44 are attached to lift frame 21 adjacent distal pivot members 32 to prevent a rotation of lift gate platform 41 away from upper and lower arms 26 and 28 beyond a horizontal orientation. This keeps lift gate platform 41 in a plane parallel with the ground and vehicle bed 66 of a vehicle 60 to facilitate loading and unloading, as shown in Figs. 3, 4, and 5. On the other hand, lift gate platform 41 may be rotated at distal pivot members 32 toward upper and lower arms 26 and 28 to a generally vertical orientation as shown in Fig. 2. In this orientation, an extension of hydraulic cylinder actuator 38 raises and inverts lift gate platform 41 into a stowed position as shown in Figs. 1 and 6.

In a preferred embodiment, lift gate platform 41 is equipped with a lift gate platform extension 48 attached by hinge 49, creating a bifold configuration. Hinge 49 allows lift gate platform extension 48 to fold against lift gate platform 41 toward parallelogram linkages 24, and prevents lift gate platform extension 48 from rotating away from parallelogram linkages 24 beyond the plane of lift gate platform 41. Lift gate platform extension 48 provides an increased load carrying area. When lift gate platform 41 is placed into the vertical position shown in Fig. 2, lift gate platform extension 48 folds back against lift gate platform 41, thereby providing a compact profile for storage. In other embodiments, more additional platform extensions may be provided creating a multiple fold configuration.

In accordance with various embodiments of the present invention, unitary frame 12 may include a variety of additional features to simplify the manufacture and to increase the utility of lift gate 10. For example, side plates 14 may comprise formed steps 51, pump bracket 52 for mounting pump 54 to power hydraulic cylinder actuator 38, dock bumpers 56 and vehicle light brackets 58. These features are integral with the unitary frame 12. However, they can also be separate members that are suitably attached to unitary frame 12. In a preferred embodiment, lift frame bar 22 is configured to function as an underride guard to minimize injury in the event of a rear end collision. Integrating underride protection into the existing lift gate system removes the need for an additional, dedicated horizontal underride protection member.

Figure 6 shows lift gate 10 attached to vehicle 60. In this arrangement, lift gate 10 carries loads between the ground level and vehicle bed 66 of vehicle 60. In accordance with a preferred embodiment of the present invention, frame adapters 71 are secured to cross members 62 at the underside of vehicle bed 66. In a preferred embodiment shown in Fig. 6, first sections 72 of frame adapters 71 are secured to vehicle bed 66 by bolts 64 through holes 73 therein. However, welding or other means of attachment can also be used. Frame adapters 71 securely attach unitary frame 12 of lift gate 10 to vehicle 60. Apertures 75 formed in second sections 74 of frame adapters 71 allow an adjustment of the position of unitary frame 12 with respect to vehicle 60. Preferably, elongated and oblique apertures 75 allow the position of unitary frame 12 to be adjusted so that extension plate 18 is substantially coplanar and flush with vehicle bed 66 of vehicle 60. Once a desired position is achieved, fastening devices, e.g., bolts 76, are tightened to secure lift gate 10 to vehicle 60.

In accordance with the present invention, all components in lift gate 10 are attached to unitary frame 12, only unitary frame 12 needs to be attached to vehicle 60 via frame adapters 71. No alignment or adjustment of the lifting mechanism is necessary. Further, the unitary construction of lift gate 10 allows it to be attached to a wide variety of truck types. Typically, the only adjustment necessary is to level extension plate 18 with vehicle bed 66. This is easily accomplished by adjusting unitary frame 12 with respect to frame adapters 71 as described above, thereby aligning extension plate 18 with vehicle bed 66. The present invention allows integrated lift gate 10 to be fully pre-assembled, requiring only final bolt-on attachment to a vehicle body with little or no adjustment.

The integrated, unitary and compact nature of lift gate 10 in accordance with the present invention also facilitates shipping, packaging and storing. Unitary frame 12 with lift gate platform 41 in the stowed position presents a compact, box-like profile that may be stored or shipped with virtually no packaging.

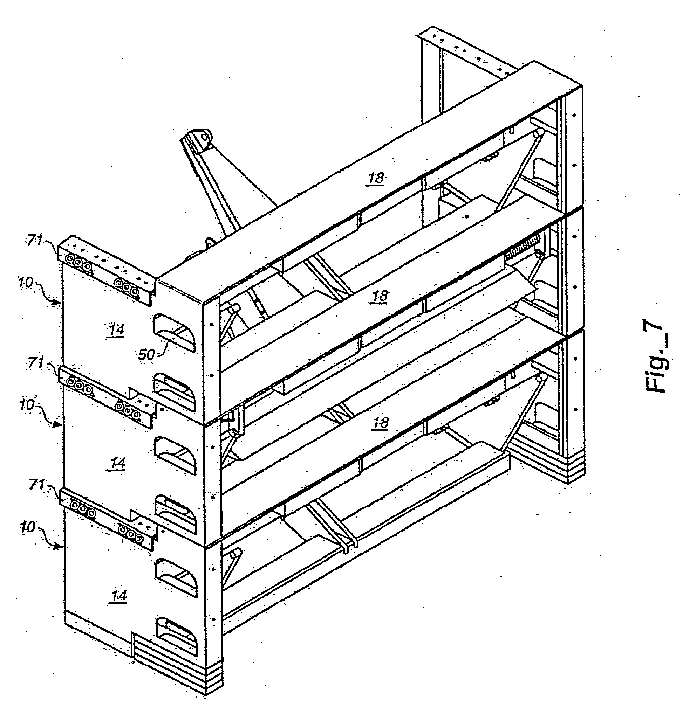

Further, multiple lift gates can be stacked and bolted together, as shown in Fig. 7, for shipment, thereby avoiding or minimizing the need to use pallets, banding material, or other packaging means. In one embodiment, the bottom profile of side plates 14 is configured to nest with the top profile of frame adapters 71 on the tops of side plates 14 and extension plate 18. This allows a stack of multiple lift gate units to be very stable and allows them to be easily secured together, by bolts or other suitable means. In another embodiment, frame adapters 71 are removed from unitary frame 12 when the multiple lift gates are stacked together. In this embodiment, the bottom profile of side plates 14 is configured to nest with the top profile of side plates 14 and extension plate 18.

Unitary cantilever lift gate 10 that attaches to the vehicle body rather than the vehicle chassis offers numerous benefits compared with prior art lift gate designs. First, lift gate 10 may be completely assembled and fully tested at the factory prior to being delivered for installment. This greatly improves quality control and simplifies installation. Lift gate 10 needs only be secured to the vehicle body by welding, bolting or other means, dramatically reducing the installation time required. Furthermore, because lift gate 10 is secured to vehicle 60, lift gate platform 41 will always be in alignment with vehicle bed 66. In prior art lift gate designs, lift platforms may become misaligned with the vehicle body. The operation of a severely misaligned lift gate may exert a differential force on the vehicle body, causing it to separate from the vehicle chassis. Lift gate 10 in accordance with the present invention completely avoids such problems.

By now it should be appreciated that a load lifting apparatus, i.e., a unitary lift gate, has been provided. The apparatus in accordance with the present invention is a pre-assembled, unitary Tuk type cantilever lift gate configured to be secured only to a platform, e.g., a vehicle body. The pre-assembled unitary lift gates may also be configured to allow multiple units to be stacked together to facilitate shipping and storage. The lift gate may be fully assembled and tested prior to being secured to the vehicle body. The features of the invention allow the lift gate to be installed and easily adjusted in significantly less time than any prior art cantilever lift gates.

While certain embodiments of the present invention are shown in the drawings and described above in detail, it should be understood that there is no intention to limit the invention to the specific form or forms disclosed. On the contrary, the intention is to cover all modifications, alternative constructions, and equivalents falling within the scope of the claims that follow.

## Claims

1. A load lifting apparatus (10) for lifting a load to and from a platform, comprising:
a unitary frame (12) including:
a first side plate and a second side plate (14), each having a plurality of orifices (17) formed therein;
a trunnion bar (16) and an extension plate (18) extending between said first side plate and said second side plate; and
a lift frame (21) pivotally attached to said first side plate and said second side plate and including
at least one pivot member (32) and
a load carrying plate (41) rotatably attached to said pivot member; the load lifting apparatus **characterised in that** it further comprises
a first frame adapter and a second frame adapter (71), each including
a first segment (72) adapted for attaching to an underside of the platform, and
a second segment (74) substantially perpendicular to said first segment and having a plurality of apertures (75) formed therein; and
a plurality of fastening devices (76) attaching said first frame adapter and said second frame adapter to respective said first side plate and said second side plate through said plurality of apertures and said plurality of orifices.

2. The load lifting apparatus (10) of claim 1, further comprising a plurality of bolts (76) to bolt said first segment (72) of said first frame adapter (71) and said first segment (72) of said second frame adapter to an underside of the platform.

3. The load lifting apparatus (10) of claim 1, wherein:
said plurality of apertures (75) in said second segment (74) of said first frame adapter (71) include a first plurality of elongated slots; and
said plurality of apertures (75) in said second segment (74) of said second frame adapter (71) include a second plurality of elongated slots.

4. The load lifting apparatus (10) of claim 3, wherein: said first plurality of elongated slots (75) are substantially parallel to each other; and said second plurality of elongated slots (75) are substantially parallel to each other.

5. The load lifting apparatus (10) of claim 4, wherein: said first plurality of elongated slots (75) are oblique with respect to said first segment (72) of said first frame adapter (71); and
said second plurality of elongated slots (75) are oblique with respect to said first segment (72) of said second frame adapter (71).

6. The load lifting apparatus (10) of claim 1, further comprising a motion limiting device (44) attached to said lift frame (21) adjacent said pivot member (32) and configured to limit a motion of said load carrying plate (41).

7. The load lifting apparatus (10) of claim 1, further comprising a hydraulic actuator (38) mounted on said unitary frame (12) and coupled to said lift frame (21).

8. The load lifting apparatus (10) of claim 1, further comprising an impact bumper (56) attached to said unitary frame (12).

9. The load lifting apparatus (10) of claim 1, wherein said lift frame (21) further includes a lift frame bar (22) configured to function as an underride guard.

10. The load lifting apparatus (10) of claim 1, wherein said unitary frame (12) further includes at least one upper stacking member and at least one lower stacking member, a profile of said lower stacking member being configured to nest with a profile of said upper stacking member.

11. A cantilever lift gate (10) configured for lifting loads to a vehicle, comprising:
a unitary frame (12) including an opposing pair of side plates (14) and a trunnion bar (16) and an extension plate (18) extending there between, each of said opposing pair of side plates having a plurality of orifices (17) formed therein adjacent an upper edge thereof;
an actuator driven lift frame (21) pivotally attached to said pair of side plates and having a pivot member (32);
a lift gate platform (41) attached to said pivot member; the lift gate **characterised in that** it further comprises
a pair of brackets (71), each including a first arm (72) configured for attaching to the underside of a vehicle bed and a second arm (74) having a plurality of slots (75) ; and
a plurality of fastening devices (76) coupling said pair of brackets to said opposing pair of side plates through said pluralities of slots and said pluralities of orifices.

12. The cantilever lift gate (10) of claim 11, wherein said plurality of slots (75) in said pair of brackets (71) allow a position of said extension plate (18) of said unitary frame (12) to be adjusted relative to the vehicle body.

13. The cantilever lift gate (10) of claim 12, wherein said extension plate (18) of said unitary frame (12) is adjusted to be substantially coplanar with a floor of the vehicle body.

14. The cantilever lift gate (10) of claim 11, wherein said actuator driven lift frame (21) is configured to be attached to said unitary frame prior to said pair of brackets being attached to the vehicle body.

15. The cantilever lift gate (10) of claim 11, further comprising a motion limiting stop (44) attached to said actuator driven lift frame (21) adjacent said pivot member (32) and configured to limit a rotational motion of the lift gate platform (41).

16. A lift gate (10) for use with a vehicle having a vehicle bed (66), comprising:
a unitary frame (12) including first and second side plates (14) having a plurality of orifices (17) formed therein, and a trunnion bar (16) and an extension plate (18) extending between said first and second side plates;
a lift frame (21) including first and second parallelogram linkages (24), each having an upper arm (26), a lower arm (28), a distal pivot member (32), and a proximal pivot member (31) secured to said trunnion bar, a lift frame bar (22) extending between said lower arms, and a lift gate platform (41) attached to said distal pivot members of said first and second parallelogram linkages;
an actuator (38) pivotally secured to said trunnion bar and to said lift frame bar, an extension of said actuator raising said lift gate platform in a first orientation to a raised position substantially coplanar with said extension plate and inverting said lift gate platform in a second orientation into a stowed position; the lift gate **characterised in that** it further comprises
first and second brackets (71), each including a first segment (72) configured for attaching to an underside of the vehicle bed and a second segment (74) having a plurality of slots (75) formed therein; and
a plurality of fastening devices (76) coupling said first and second brackets to respective said first and second side plates through said pluralities of slots and said pluralities of orifices.

17. The lift gate (10) of claim 16, wherein said plurality of slots (75) in said first and second brackets (71) allow an adjustment of a position of said extension plate (18) of said unitary frame (12) relative to the vehicle bed (66).

18. The lift gate (10) of claim 17, wherein:
said first segment (72) of each of said first and second brackets (71) is substantially perpendicular to said second segment (74) thereof; and
said plurality of slots (75) in said first and second brackets includes slots formed in said second segments and oblique with respect to said first segments.

19. The lift gate (10) of claim 16, further comprising first and second motion restriction tabs (44) mounted on said first and second parallelogram linkages (24) adjacent said distal pivot members (32), said first and second motion restriction tabs preventing a rotation of said lift gate platform (41) away from said upper (26) and lower (28) arms past the first orientation substantially parallel to said extension plate (18) and allowing a rotation of said lift gate platform toward said upper and lower arms to the second orientation substantially perpendicular to said extension plate.

20. The lift gate of claim 16, wherein said actuator (38) includes a hydraulic cylinder.

21. A method for providing a cantilever lift gate (10), comprising the steps of:
(a) providing a unitary frame (12) comprising an opposing pair of side plates (14) and a trunnion bar (16) and an extension plate (18) extending between the side plates;
(b) attaching a lift frame (21) to the side plates;
(c) rotatably attaching a side of a lift gate platform (41) to a pivot member (32) of the lift frame; the method being **characterised by** the step of
(d) attaching a pair of brackets (71) to the opposing pair of side plates in the unitary frame using bolts (76) through a plurality of apertures (75,17) formed in the brackets and the side plates, the pair of brackets (71) each including a first segment configured for attachment to an underside of a vehicle bed and a second segment having the plurality of apertures.

22. The method of claim 21, further comprising the step of attaching a motion limit member (44) to the pivot member (32) of the lift frame (21) to confine a motion of the lift gate platform (41) between a first orientation and a second orientation substantially perpendicular to each other.

23. A method of mounting the lift gate as provided in claim 21 to a vehicle body, comprising the steps of:
(e) securing the brackets (71) to a vehicle body; and
(f) aligning the extension plate (18) in the unitary frame (12) to the vehicle body by adjusting a position of the apertures in the pair of side plates relative to the apertures (17) in the pair of brackets (71).

24. The method of claim 23, further comprising, after completing steps (a), (b), (c), and (d), and before performing steps (e) and (f), the step of:
(g) stacking the cantilever lift gate (10) on top of another cantilever lift gate (10).

25. The method of claim 24, further comprising, after completing steps (a), (b), (c), (d), and (g), and before performing steps (e) and (f), the step of:
(h) packaging and shipping the stacked cantilever lift gates (10) together.

## Patentansprüche

1. Lastenhubvorrichtung (10) zum Heben einer Last auf eine und von einer Plattform, welche Vorrichtung umfasst:
einen einheitlichen Rahmen (12) mit:
einer ersten Seitenplatte und einer zweiten Seitenplatte (14), die jeweils eine Mehrzahl von darin ausgebildeten Löchern (17) aufweisen;
einer Tragzapfen-Stange (16) und einer Verlängerungsplatte (18), die sich zwischen der ersten Platte und der zweiten Platte erstrecken; und
einem Hubrahmen (21), der schwenkbar an der ersten Platte und an der zweiten Platte befestigt ist und aufweist:
mindestens ein Schwenkzapfenelement (32) und
eine Lasten-tragende Platte (41), die drehbar am Schwenkzapfenelement befestigt ist, wobei die Lastenhubvorrichtung **dadurch gekennzeichnet ist, dass** sie weiters umfasst:
einen ersten Rahmen-Adapter und einen zweiten Rahmen-Adapter (71), die jeweils aufweisen:
ein erstes Segment (72), das zur Befestigung an einer Unterseite der Plattform ausgelegt ist, und
ein zweites Segment (74), das im Wesentlichen normal zum ersten Segment verläuft und eine Mehrzahl von darin ausgebildeten Öffnungen (75) aufweist; und
eine Mehrzahl von Befestigungseinrichtungen (76), welche den ersten Rahmen-Adapter und den zweiten Rahmen-Adapter jeweils an der ersten Seitenplatte bzw. der zweiten Seitenplatte durch die Mehrzahl der Öffnungen und die Mehrzahl der Löcher hindurch befestigen.

2. Lastenhubvorrichtung (10) nach Anspruch 1, welche weiters eine Mehrzahl von Schrauben (76) zum Anschrauben des ersten Segments (72) des ersten Rahmen-Adapters (71) und des ersten Segments (72) des zweiten Rahmen-Adapters an einer Unterseite der Plattform aufweist.

3. Lastenhubvorrichtung (10) nach Anspruch 1, wobei
die Mehrzahl der Öffnungen (75) im zweiten Segment (74) des ersten Rahmen-Adapters (71) eine erste Mehrzahl von Längsschlitzen inkludieren; und
die Mehrzahl der Öffnungen (75) im zweiten Segment (74) des zweiten Rahmen-Adapters (71) eine zweite Mehrzahl von Längsschlitzen inkludieren.

4. Lastenhubvorrichtung (10) nach Anspruch 3, wobei: die erste Mehrzahl von Längsschlitzen (75) im Wesentlichen parallel zueinander verlaufen; und die zweite Mehrzahl von Längsschlitzen (75) im Wesentlichen parallel zueinander verlaufen.

5. Lastenhubvorrichtung (10) nach Anspruch 4, wobei: die erste Mehrzahl von Längsschlitzen (75) schräg in Bezug auf das erste Segment (72) des ersten Rahmen-Adapters (71) verlaufen; und
die zweite Mehrzahl von Längsschlitzen (75) schräg in Bezug auf das erste Segment (72) des zweiten Rahmen-Adapters (71) verlaufen.

6. Lastenhubvorrichtung (10) nach Anspruch 1, weiters umfassend eine Bewegungsbeschränkungseinrichtung (44), die am Hubrahmen (21) angrenzend an das Schwenkzapfenelement (32) befestigt ist und konfiguriert ist, eine Bewegung der Lastentragenden Platte (41) zu beschränken.

7. Lastenhubvorrichtung (10) nach Anspruch 1, welche weiters eine hydraulische Betätigungseinrichtung (38) aufweist, die am einheitlichen Rahmen (12) angebracht und mit dem Hubrahmen (21) gekuppelt ist.

8. Lastenhubvorrichtung (10) nach Anspruch 1, weiters mit einer Stoßstange (56), die am einheitlichen Rahmen (12) befestigt ist.

9. Lastenhubvorrichtung (10) nach Anspruch 1, wobei der Hubrahmen (21) weiters eine Hubrahmenstange (22) aufweist, die konfiguriert ist, als Unterfahrschutz zu fungieren.

10. Lastenhubvorrichtung (10) nach Anspruch 1, wobei der einheitliche Rahmen (12) weiters mindestens ein oberes Stapelelement und mindestens ein unteres Stapelelement aufweist, wobei ein Profil des unteren Stapelelements so konfiguriert ist, dass es mit einem Profil des oberen Stapelelements verschachtelt werden kann.

11. Ausleger-Hubtor (10), welches konfiguriert ist, Lasten auf ein Fahrzeug zu heben, welches Hubtor umfasst:
einen einheitlichen Rahmen (12) mit einem Paar einander gegenüberliegender Seitenplatten (14) und einer Tragzapfen-Stange (16) und einer Verlängerungsplatte (18), welche sich dazwischen erstrecken, wobei jede der einander gegenüberliegenden Seitenplatten des Paares eine Mehrzahl von darin ausgebildeten Löchern (17) angrenzend an einen oberen Rand derselben hat;
einen von einer Betätigungseinrichtung angetriebenen Hubrahmen (21), der schwenkbar an dem Paar Seitenplatten befestigt ist und ein Schwenkzapfenelement (32) aufweist;
eine Hubtorplattform (41), die am Schwenkzapfenelement befestigt ist; wobei das Hubtor **dadurch gekennzeichnet ist, dass** es weiters
ein Paar Halterungen (71) aufweist, die jeweils einen ersten Arm (72) haben, der zur Befestigung an der Unterseite einer Fahzeug-Auflagefläche konfiguriert ist, und einen zweiten Arm (74) mit einer Mehrzahl von Schlitzen (75); und
eine Mehrzahl von Befestigungseinrichtungen (76), die das Paar Halterungen am gegenüberliegenden Seitenplatten-Paar durch die Mehrzahl der Schlitze und die Mehrzahl der Löcher hindurch kuppeln.

12. Ausleger-Hubtor (10) nach Anspruch 11, wobei die Mehrzahl der Schlitze (75) im Paar der Halterungen (71) es ermöglichen, eine Position der Verlängerungsplatte (18) des einheitlichen Rahmens (12) relativ zum Fahrzeugkörper einzustellen.

13. Ausleger-Hubtor (10) nach Anspruch 12, wobei die Verlängerungsplatte (18) des einheitlichen Rahmens (12) so eingestellt wird, dass sie im Wesentlichen koplanar mit einem Boden des Fahrzeugkörpers verläuft.

14. Ausleger-Hubtor (10) nach Anspruch 11, wobei der von der Betätigungseinrichtung angetriebene Hubrahmen (21) so konfiguriert ist, dass er am einheitlichen Rahmen befestigt wird, bevor das Paar Halterungen am Fahrzeugkörper befestigt wird.

15. Ausleger-Hubtor (10) nach Anspruch 11, welches weiters einen die Bewegung begrenzenden Anschlag (44) aufweist, der an dem von der Betätigungseinrichtung angetriebenen Hubrahmen (21) angrenzend an das Schwenkzapfenelement (32) befestigt und konfiguriert ist, eine Drehbewegung der Hubtor-Plattform (41) zu begrenzen.

16. Hubtor (10) zur Verwendung mit einem Fahrzeug mit einer Fahrzeug-Auflagefläche (66), welches Hubtor aufweist:
einen einheitlichen Rahmen (12) mit einer ersten und einer zweiten Seitenplatte (14) mit einer Mehrzahl von darin ausgebildeten Löchern (17), und einer Tragzapfen-Stange (16) und einer Verlängerungsplatte (18), welche sich zwischen der ersten und der zweiten Platte erstrecken;
einen Hubrahmen (21) mit einem ersten und einem zweiten Parallelogrammgestänge (24), das jeweils einen oberen Arm (26), einen unteren Arm (28), ein distales Schwenkzapfenelement (32) und ein proximales Schwenkzapfenelement (31) aufweist, die an der Tragzapfen-Stange befestigt sind, eine Hubrahmen-Stange (22), die sich zwischen den unteren Armen erstreckt, und eine Hubtor-Plattform (41), die an den distalen Schwenkzapfenelementen des ersten und des zweiten Parallelogrammgestänges befestigt ist;
eine Betätigungseinrichtung (38), die schwenkbar an der Tragzapfen-Stange und an der Hubrahmen-Stange befestigt ist, wobei eine Verlängerung der Betätigungseinrichtung die Hubtor-Plattform in einer ersten Ausrichtung zu einer angehobenen Position hebt, die im Wesentlichen mit der Verlängerungsplatte koplanar verläuft, und die Hubtor-Plattform in eine zweite Ausrichtung in eine verstaute Position umdreht, wobei das Hubtor **dadurch gekennzeichnet ist, dass** es weiters aufweist:
eine erste und eine zweite Halterung (71), die jeweils ein erstes Segment (72) haben, das zur Befestigung an der Unterseite einer Fahrzeug-Auflagefläche konfiguriert ist, sowie ein zweites Segment (74) mit einer Mehrzahl von darin ausgebildeten Schlitzen (75); und
eine Mehrzahl von Befestigungseinrichtungen (76), die die erste und die zweite Halterung jeweils an der ersten und an der zweiten Seitenplatte durch die Mehrzahl der Schlitze und die Mehrzahl der Löcher hindurch kuppeln.

17. Hubtor (10) nach Anspruch 16, wobei die Mehrzahl der Schlitze (75) in der ersten und der zweiten Halterung (71) ein Verstellen einer Position der Verlängerungsplatte (18) des einheitlichen Rahmens (12) relativ zur Fahrzeug-Auflagefläche (66) ermöglichen.

18. Hubtor (10) nach Anspruch 17, wobei
das erste Segment (72) von jeweils der ersten und der zweiten Halterung (71) im Wesentlichen normal zum zweiten Segment (74) derselben steht; und
die Mehrzahl von Schlitzen (75) in der ersten und der zweiten Halterung Schlitze umfasst, die in den zweiten Segmenten ausgebildet sind und in Bezug auf die ersten Segmente schräg verlaufen.

19. Hubtor (10) nach Anspruch 16, welches weiters eine erste und eine zweite Bewegungsbeschränkungsnase (44) aufweist, die am ersten und am zweiten Parallelogramgestänge (24) angrenzend an die distalen Schwenkzapfenelemente (32) angebracht sind, wobei die erste und die zweite Bewegungsbeschränkungsnase eine Drehung der Hubtor-Plattform (41) vom oberen (26) und unteren (28) Arm weg, über die erste Ausrichtung im Wesentlichen parallel zur Verlängerungsplatte (18) hinaus verhindert und eine Drehung der Hubtor-Plattform zu den oberen und unteren Armen hin in die zweite Ausrichtung im Wesentlichen normal zur Verlängerungsplatte ermöglicht.

20. Hubtor nach Anspruch 16, wobei die Betätigungseinrichtung (38) einen Hydraulikzylinder inkludiert.

21. Verfahren zum Vorsehen eines Ausleger-Hubtors (10), welches die Schritte umfasst:
(a) Vorsehen eines einheitlichen Rahmens (12) mit einem Paar von einander gegenüberliegenden Seitenplatten (14) und einer Tragzapfen-Stange (16) und einer Verlängerungsplatte (18), die sich zwischen den Seitenplatten erstrecken;
(b) Befestigen des Hubrahmens (21) an den Seitenplatten;
(c) drehbares Befestigen einer Seite einer Hubtor-Plattform (41) an einem Schwenkzapfenelement (32) des Hubtors; wobei das Verfahren **gekennzeichnet ist durch** den Schritt
(d) Befestigen eines Paares von Halterungen (71) am Paar gegenüberliegender Seitenplatten im einheitlichen Rahmen unter Verwendung von Schrauben (76) **durch** eine Mehrzahl von in den Halterungen und in den Seitenplatten ausgebildeten Öffnungen (75, 17), wobei das Paar der Halterungen (71) jeweils ein erstes Segment, das zur Befestigung an einer Unterseite einer Fahrzeug-Auflagefläche konfiguriert ist, und ein zweites Segment mit einer Mehrzahl von Öffnungen aufweist.

22. Verfahren nach Anspruch 21, welches weiters den Schritt des Befestigens einer Bewegungsbeschränkungseinrichtung (44) am Schwenkzapfenelement (32) des Hubrahmens (21) aufweist, um eine Bewegung der Hubtor-Plattform (41) zwischen einer ersten Ausrichtung und einer zweiten Ausrichtung im Wesentlichen normal zu einander zu begrenzen.

23. Verfahren zum Anbringen des Hubtors nach Anspruch 21 an einem Fahrzeug-Körper, mit den Schritten:
(e) Befestigen der Halterungen (71) an einem Fahrzeug-Körper; und
(f) Zum-Fluchten-Bringen der verlängerungsplatte (18) im einheitlichen Rahmen (12) mit dem Fahrzeug-Körper durch Einstellen der Position der Öffnungen im Paar Seitenplatten relativ zu den Öffnungen (17) im Paar Halterungen (71).

24. Verfahren nach Anspruch 23, welches weiters nach Vollendung der Schritte (a), (b), (c) und (d) und vor dem Durchführen der Schritte (e) und (f) den Schritt
(g) Stapeln des Ausleger-Hubtors (10) oben auf einem anderen Ausleger-Hubtor (10) aufweist.

25. Verfahren nach Anspruch 24, welches weiters nach Vollendung der Schritte (a), (b), (c), (d) und (g) und vor dem Durchführen der Schritte (e) und (f) den Schritt
(h) gemeinsames Verpacken und Versenden der gestapelten Ausleger-Hubtore (10) aufweist.

## Revendications

1. Appareil de levage de charge (10) pour lever une charge vers et à partir d'une plate-forme, comprenant :
un châssis unitaire (12) comprenant :
une première plaque latérale et une deuxième plaque latérale (14), chacune ayant une pluralité d'orifices (17) formés à l'intérieur de celle-ci ;
une barre de tourillon (16) et une plaque d'extension (18) s'étendant entre ladite première plaque latérale et ladite deuxième plaque latérale ; et
un châssis de levage (21) attaché de manière pivotante à ladite première plaque latérale et à ladite deuxième plaque latérale et comprenant au moins un membre pivot (32) et
une plaque de support de charge (41) attachée de manière rotative au dit membre pivot ; l'appareil de levage de charge étant **caractérisé en ce qu'**il comprend en outre :
un premier adaptateur de châssis et un deuxième adaptateur de châssis (71), chacun comprenant un premier segment (72) adapté pour l'attachement à un dessous de 1a plate-forme, et
un deuxième segment (74) sensiblement perpendiculaire au dit premier segment et ayant une pluralité d'ouvertures (75) formées à l'intérieur de celui-ci ; et
une pluralité de dispositifs de fixation (76) attachant ledit premier adaptateur de châssis et ledit deuxième adaptateur de châssis respectivement à ladite première plaque latérale et à ladite deuxième plaque latérale à travers ladite pluralité d'ouvertures et ladite pluralité d'orifices.

2. Appareil de levage de charge (10) selon la revendication 1, comprenant en outre une pluralité de boulons (76) pour boulonner ledit premier segment (72) dudit premier adaptateur de châssis (71) et ledit premier segment (72) dudit deuxième adaptateur de châssis à un dessous de la plate-forme.

3. Appareil de levage de charge (10) selon la revendication 1, dans lequel :
ladite pluralité d'ouvertures (75) dans ledit deuxième segment (74) dudit premier adaptateur de châssis (71) comprend une première pluralité de fentes allongées ; et
ladite pluralité d'ouvertures (75) dans ledit deuxième segment (74) dudit deuxième adaptateur de châssis (71) comprend une deuxième pluralité de fentes allongées.

4. Appareil de levage de charge (10) selon la revendication 3, dans lequel : ladite première pluralité de fentes allongées (75) sont sensiblement parallèles entre elles ; et ladite deuxième pluralité de fentes allongées (75) sont sensiblement parallèles entre elles.

5. Appareil de levage de charge (10) selon la revendication 4, dans lequel : ladite première pluralité de fentes allongées (75) sont obliques par rapport au dit premier segment (72) dudit premier adaptateur de châssis (71) ; et ladite deuxième pluralité de fentes allongées (75) sont obliques par rapport au dit premier segment (72) dudit deuxième adaptateur de châssis (71).

6. Appareil de levage de charge (10) selon la revendication 1, comprenant en outre un dispositif de limitation de mouvement (44) attaché au dit châssis de levage (21) adjacent au dit membre pivot (32) et configuré pour limiter un mouvement de ladite plaque de support de charge (41).

7. Appareil de levage de charge (10) selon la revendication 1, comprenant en outre un actionneur hydraulique (38) monté sur ledit châssis unitaire (12) et couplé au dit châssis de levage (21).

8. Appareil de levage de charge (10) selon la revendication 1, comprenant en outre un pare-chocs (56) attaché au dit châssis unitaire (12).

9. Appareil de levage de charge (10) selon la revendication 1, dans lequel ledit châssis de levage (21) comprend en outre une barre de châssis de levage (22) configurée pour fonctionner comme une protection anti-encastrement.

10. Appareil de levage de charge (10) selon la revendication 1, dans lequel ledit châssis unitaire (12) comprend en outre au moins un membre d'empilage supérieur et au moins un membre d'empilage inférieur, un profil dudit membre d'empilage inférieur étant configuré pour s'emboîter avec un profil dudit membre d'empilage supérieur.

11. Porte de levage en porte-à-faux (10) configurée pour lever des charges sur un véhicule, comprenant :
un châssis unitaire (12) comprenant une paire opposée de plaques latérales (14) et une barre de tourillon (16) et une plaque d'extension (18) s'étendant entre celles-ci, chacune de ladite paire opposée de plaques latérales ayant une pluralité d'orifices (17) formés à l'intérieur de celle-ci adjacents à un bord supérieur de celle-ci ;
un châssis de levage entraîné par actionneur (21) attaché de manière pivotante à ladite paire de plaques latérales et ayant un membre pivot (32) ;
une plate-forme de porte de levage (41) attachée au dit membre pivot ; la porte de levage étant **caractérisée en ce qu'**elle comprend en outre :
une paire de supports (71), chacun comprenant un premier bras (72) configuré pour s'attacher au dessous d'un plateau de véhicule et un deuxième bras (74) ayant une pluralité de fentes (75) ; et
une pluralité de dispositifs de fixation (76) couplant ladite paire de supports à ladite paire opposée de plaques latérales à travers lesdites pluralités de fentes et lesdites pluralités d'orifices.

12. Porte de levage en porte-à-faux (10) selon la revendication 11, dans laquelle ladite pluralité de fentes (75) dans ladite paire de supports (71) permet à une position de ladite plaque d'extension (18) dudit châssis unitaire (12) d'être ajustée par rapport à la carrosserie de véhicule.

13. Porte de levage en porte-à-faux (10) selon la revendication 12, dans laquelle ladite plaque d'extension (18) dudit châssis unitaire (12) est ajustée pour être sensiblement coplanaire avec un plancher de la carrosserie de véhicule.

14. Porte de levage en porte-à-faux (10) selon la revendication 11, dans laquelle ledit châssis de levage entraîné par actionneur (21) est configuré pour être attaché au dit châssis unitaire avant que ladite paire de supports ne soit attachée à la carrosserie de véhicule.

15. Porte de levage en porte-à-faux (10) selon la revendication 11, comprenant en outre une butée de limitation de mouvement (44) attachée au dit châssis de levage entraîné par actionneur (21) adjacent au dit membre pivot (32) et configurée pour limiter un mouvement rotationnel de la plate-forme de porte de levage (41).

16. Porte de levage (10) pour utilisation avec un véhicule ayant un plateau de véhicule (66), comprenant :
un châssis unitaire (12) comprenant des première et deuxième plaques latérales (14) ayant une pluralité d'orifices (17) formés à l'intérieur de celles-ci, et une barre de tourillon (16) et une plaque d'extension s'étendant entre lesdites première et deuxième plaques latérales ;
un châssis de levage (21) comprenant des première et deuxième liaisons en parallélogramme (24), chacune ayant un bras supérieur (26), un bras inférieur (28), un membre pivot distal (32), et un membre pivot proximal (31) fixé à ladite barre de tourillon, une barre de châssis de levage (22) s'étendant entre lesdits bras inférieurs, et une plate-forme de porte de levage (41) attachée aux dits membres pivots distaux desdites première et deuxième liaisons en parallélogramme ;
un actionneur (38) fixé de manière pivotante à ladite barre de tourillon et à ladite barre de châssis de levage, une extension dudit actionneur soulevant ladite plate-forme de porte de levage dans une première orientation à une position soulevée sensiblement coplanaire avec ladite plaque d'extension et inversant ladite plate-forme de porte de levage dans une deuxième orientation à une position rangée ; la porte de levage étant **caractérisée en ce qu'**elle comprend en outre :
des premier et deuxième supports (71), chacun comprenant un premier segment (72) configuré pour s'attacher à un dessous du plateau de véhicule et un deuxième segment (74) ayant une pluralité de fentes (75) formées à l'intérieur de celui-ci ; et
une pluralité de dispositifs de fixation (76) couplant lesdits premier et deuxième supports respectivement aux dites première et deuxième plaques latérales à travers lesdites pluralités de fentes et lesdites pluralités d'orifices.

17. Porte de levage (10) selon la revendication 16, dans laquelle ladite pluralité de fentes (75) dans lesdits premier et deuxième supports (71) permet un ajustement d'une position de ladite plaque d'extension (18) dudit châssis unitaire (12) par rapport au plateau de véhicule (66).

18. Porte de levage (10) selon la revendication 17, dans laquelle :
ledit premier segment (72) de chacun desdits premier et deuxième supports (71) est sensiblement perpendiculaire au dit deuxième segment (74) de celui-ci ; et
ladite pluralité de fentes (75) dans lesdits premier et deuxième supports comprend des fentes formées dans lesdits deuxièmes segments et obliques par rapport aux dits premiers segments.

19. Porte de levage (10) selon la revendication 16, comprenant en outre des première et deuxième pattes de restriction de mouvement (44) montées sur lesdites première et deuxième liaisons en parallélogramme (24) adjacentes aux dits membres pivots distaux (32), lesdites première et deuxième pattes de restriction de mouvement empêchant une rotation de ladite plate-forme de porte de levage (41) à l'écart desdits bras supérieur (26) et inférieur (28) au delà de la première orientation sensiblement parallèle à ladite plaque extension (18) et permettant une rotation de ladite plate-forme de porte de levage vers lesdits bras supérieur et inférieur dans le sens de la deuxième orientation sensiblement perpendiculaire à ladite plaque d'extension.

20. Porte de levage selon la revendication 16, dans laquelle ledit actionneur (38) comprend un cylindre hydraulique.

21. Procédé pour fournir une porte de levage en porte-à-faux (10), comprenant les étapes consistant à :
(a) fournir un châssis unitaire (12) comprenant une paire opposée de plaques latérales (14) et une barre de tourillon (16) et une plaque d'extension (18) s'étendant entre les plaques latérales ;
(b) attacher un châssis de levage (21) aux plaques latérales ;
(c) attacher de manière rotative un côté d'une plate-forme de porte de levage (41) à un membre pivot (32) du châssis de levage ; le procédé étant **caractérisé par** l'étape consistant à :
(d) attacher une paire de supports (71) à la paire opposée de plaques latérales dans le châssis unitaire en utilisant des boulons (76) à travers une pluralité d'ouvertures (75, 17) formées dans les supports et les plaques latérales, chacun de la paire de supports (71) comprenant un premier segment configuré pour l'attachement à un dessous d'un plateau de véhicule et un deuxième segment ayant la pluralité d'ouvertures.

22. Procédé selon la revendication 21, comprenant en outre l'étape consistant à attacher un membre de limitation de mouvement (44) au membre pivot (32) du châssis de levage (21) pour confiner un mouvement de la plate-forme de porte de levage (41) entre une première orientation et une deuxième orientation sensiblement perpendiculaires entre elles.

23. Procédé de montage de la porte de levage selon la revendication 21 sur une carrosserie de véhicule, comprenant les étapes consistant à :
(e) fixer les supports (75) sur une carrosserie de véhicule ; et
(f) aligner la plaque d'extension (18) dans le châssis unitaire (12) avec la carrosserie de véhicule en ajustant une position des ouvertures dans la paire de plaques latérales par rapport aux ouvertures (17) dans la paire de supports (71).

24. Procédé selon la revendication 23, comprenant en outre, après l'exécution des étapes (a), (b), (c), et (d), et avant l'exécution des étapes (e) et (f), l'étape consistant à :
(g) empiler la porte de levage en porte-à-faux (10) au-dessus d'une autre porte de levage en porte-à-faux (10).

25. Procédé selon la revendication 24, comprenant en outre, après l'exécution des étapes (a), (b), (c), (d) et (g), et avant l'exécution des étapes (e) et (f), l'étape consistant à :
(h) conditionner et expédier les portes de levage en porte-à-faux empilées (10) ensemble.
